# FASCICULE DE BREVET EUROPEEN

(11) **EP 2 925 604 B1**
(45) Date de publication et mention de la délivrance du brevet: **02.01.2019**
(21) Numéro de dépôt: 13796108.2
(22) Date de dépôt: 29.11.2013
(51) Int. Cl.: B64C 25/26

(54) **ATTERRISSEUR A CONTREFICHE SECONDAIRE A REALIGNEMENT**
FAHRWERK MIT NEUAUSRICHTENDER VERRIEGELUNGSVERBINDUNGSBAUGRUPPE
LANDING GEAR WITH REALIGNING LOCK LINK ASSEMBLY

(30) Priorité: 30.11.2012 FR 1203253
(43) Date de publication de la demande: 07.10.2015
(73) Titulaire: Safran Landing Systems, 78140 Vélizy-Villacoublay (FR)
(72) Inventeur: HENRION, Philippe, 78140 Velizy-Villacoublay (FR); DUCOS, Dominique, 78140 Velizy-Villacoublay (FR); NGUYEN, Nicolas, 78140 Velizy-Villacoublay (FR)
(74) Mandataire: Parzy, Benjamin Alain
(86) Numéro de dépôt international: PCT/EP2013/075129
(87) Numéro de publication internationale: WO 2014/083170

(56) Documents cités:
- WO-A1-2010/139756
- FR-A1- 2 139 182
- FR-A1- 2 801 865
- FR-A1- 2 928 623
- US-A- 5 022 609

## Description

L'invention concerne un atterrisseur rétractable d'aéronef dont la contrefiche secondaire se réaligne lorsque l'atterrisseur est en position rétractée.

### ARRIERE PLAN DE L'INVENTION

Il est connu des atterrisseurs comportant une jambe montée articulée sur la structure de l'aéronef pour être mobile entre une position déployée et une position rétractée. La jambe est stabilisée en position déployée par au moins une contrefiche principale comprenant deux bielles articulées entre elles, l'une des bielles étant attelée à la jambe, tandis que l'autre des bielles est attelée à la structure de l'aéronef. Lorsque l'atterrisseur est en position déployée, les deux bielles de la contrefiche principale sont maintenues en position sensiblement alignée par un dispositif de verrouillage.

Le dispositif de verrouillage comprend lui-même un ensemble de deux biellettes articulées entre elles, l'une des biellettes étant attelée à la contrefiche principale, tandis que l'autre des biellettes est attelée soit à la jambe, soit à la structure de l'aéronef. Les deux biellettes sont en position sensiblement alignée lorsque l'atterrisseur est en position déployée. On désigne par alignement secondaire l'alignement des biellettes du dispositif de verrouillage, par opposition à l'alignement principal des bielles de la contrefiche principale. Pour cette raison, le dispositif de verrouillage est également appelé contrefiche secondaire. Le maintien de l'alignement secondaire est généralement garanti par des ressorts qui confirment les biellettes en butée l'une contre l'autre dans la position alignée.

Un actionneur de déverrouillage simple effet est attelé à l'une des biellettes pour casser cet alignement secondaire à l'encontre des ressorts lorsque l'on désire procéder à la rétraction de l'atterrisseur.

Il est connu de prévoir une cinématique de relevage dans laquelle les biellettes de la contrefiche secondaire se réalignent lorsque l'atterrisseur arrive en position rétractée. La contrefiche secondaire forme alors avec celle des bielles de la contrefiche qui est articulée sur l'aéronef une structure rigide à laquelle la jambe de l'atterrisseur est liée par l'autre bielle de contrefiche, ce qui permet de verrouiller l'atterrisseur en position rétractée, et donc d'éviter l'emploi d'un boîtier d'accrochage pour l'atterrisseur. Cependant, dans une telle configuration, il faut prendre garde à ce que l'action de l'actionneur de déverrouillage soit stoppée avant le réalignement des biellettes de la contrefiche secondaire, sinon ce dernier empêcherait tout réalignement. Ceci impose la mise en place d'une séquence, dont la défaillance empêcherait le verrouillage en position rétractée.

Des exemples de l'art antérieur sont fournis par les documents US5022609, FR2139182, WO2010139756, FR2801865 et FR2928623.

### OBJET DE L'INVENTION

L'invention a pour objet un atterrisseur à contrefiche principale et contrefiche secondaire de fonctionnement simplifié.

### RESUME DE L'INVENTION

En vue de la réalisation de ce but, on propose un atterrisseur d'aéronef comportant :
- une jambe destinée à être articulée sur une structure de l'aéronef pour être mobile entre une position déployée et une position rétractée ;
- une contrefiche principale comportant deux bielles articulées entre elles, l'une étant attelée à la jambe, et l'autre pouvant être attelée à la structure de l'aéronef, de sorte que lorsque la jambe est en position déployée, les bielles sont sensiblement alignées ;
- une contrefiche secondaire comportant deux biellettes articulées entre elles, l'une étant attelée à la contrefiche, et l'autre étant attelée à la jambe, de sorte que lorsque la jambe est en position déployée ainsi que lorsque la jambe est en position rétractée, les biellettes sont sensiblement alignées entre elles et maintenues dans leur alignement par un organe élastique confirmant les biellettes en butée dans la position alignée ;
- un actionneur de déverrouillage ayant une première extrémité attelée à la contrefiche secondaire et commandable pour provoquer un désalignement des biellettes lors d'une rétraction ou d'un déploiement de l'atterrisseur à l'encontre de l'action de l'organe élastique.

Selon l'invention, l'actionneur de déverrouillage est du type double effet, et l'atterrisseur comporte des moyens d'attelage d'une deuxième extrémité de l'actionneur de déverrouillage qui assurent un déplacement relatif de ladite deuxième extrémité vis-à-vis de la jambe de sorte que, pour une même action, l'actionneur de déverrouillage tend à briser un alignement des biellettes lorsque l'atterrisseur est dans l'une des positions, et tend à confirmer ledit alignement lorsque l'atterrisseur est dans l'autre des positions.

Selon un mode particulier de réalisation, la deuxième extrémité de l'actionneur de déverrouillage est articulée sur la première extrémité d'un basculeur articulé sur la jambe, le basculeur ayant une deuxième extrémité qui est relié à un point fixe de la structure de l'aéronef au moyen d'une bielle directrice.

### BREVE DESCRIPTION DES DESSINS

L'invention sera mieux comprise en référence à l'unique figure annexée représentant, un atterrisseur selon un mode particulier de réalisation de l'invention en position déployée, et, en squelette en traits mixtes le même atterrisseur en position rétractée.

### DESCRIPTION DETAILLEE DE L'INVENTION

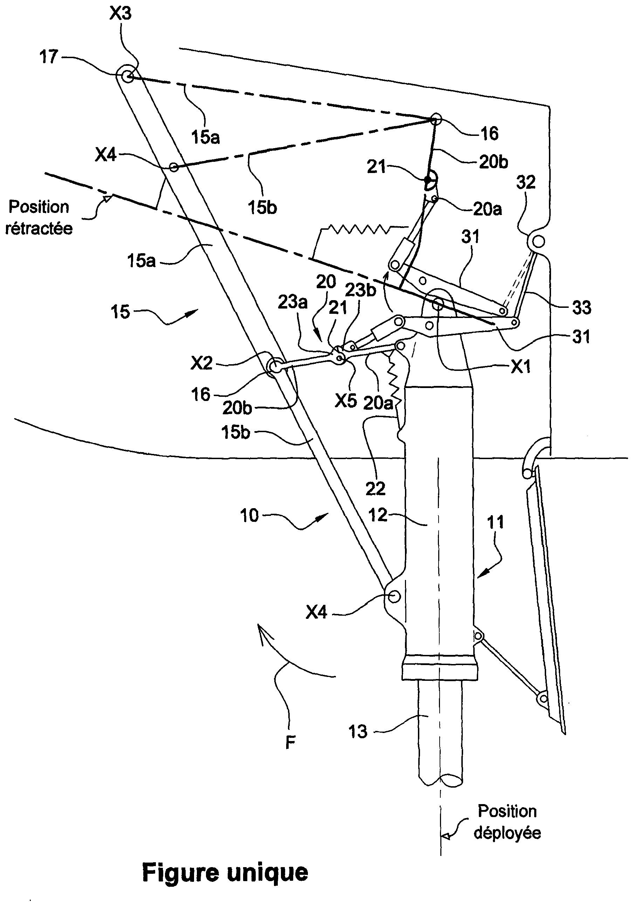

Sur la figure 1, on reconnaît en silhouette la pointe avant d'un aéronef, et la soute d'un atterrisseur auxiliaire 10. Tous les axes d'articulation qui seront mentionnés ensuite sont parallèles entre eux et vus en bout sur la figure.

L'atterrisseur 10, ici représentée en position déployée, comporte une jambe 11 avec un caisson 12 qui est articulé sur l'aéronef selon un axe X1, et qui reçoit une tige coulissante 13 qui porte des roues (non représentées) à son extrémité.

La jambe 11 est stabilisée en position déployée par une contrefiche principale 15 qui comporte une bielle supérieure 15a et une bielle inférieure 15b qui sont articulées entre elles selon un axe X2 au niveau d'un genou 16. La bielle supérieure 15a est par ailleurs articulée sur la structure de l'aéronef selon un axe X3, tandis que la bielle inférieure est articulée sur la jambe 11 selon un axe X4. Dans la position représentée ici, les bielles 15a, 15b de la contrefiche principale 15 sont sensiblement alignées.

Pour maintenir la contrefiche principale en position alignée, l'atterrisseur est équipé d'une contrefiche secondaire 20 qui comporte une biellette supérieure 20a et une biellette inférieure 20b qui sont articulées entre elles au niveau d'un genou 21 selon un axe X5. La biellette supérieure 20a est par ailleurs articulée sur le caisson 12 selon un axe X6, tandis que la biellette inférieure 20b est articulée sur la contrefiche principale selon l'axe X2. Dans la position représentée ici, les biellettes 20a,20b sont sensiblement alignées, et sont maintenues dans l'alignement par un ressort 22 attelé entre le caisson 12 et la biellette supérieure 20a qui confirme les biellettes en butée l'une contre l'autre. A cet effet, les biellettes 20a,20b sont munies de butées 23a,23b au niveau du genou 21.

Tout ceci est bien connu et n'est rappelé qu'à titre d'illustration.

Selon l'invention, l'atterrisseur est équipé d'un actionneur de déverrouillage 30 à double effet, dont une extrémité est attelée à la biellette supérieure 20a de la contrefiche secondaire 20, et une autre extrémité est articulée à l'extrémité de l'un des bras d'un basculeur 31 qui est lui-même monté articulé sur le caisson selon un axe X7. Le basculeur comporte un autre bras dont l'extrémité est reliée à un point fixe 32 de la structure de l'aéronef au moyen d'une bielle directrice 33.

Le fonctionnement de l'ensemble est le suivant. Dans la position déployée représentée ici, la contrefiche principale 15 et la contrefiche secondaire 20 sont alignées. Le ressort 22 maintient les biellettes de la contrefiche secondaire 20 en position alignée, ce qui stabilise et verrouille la contrefiche principale dans la position alignée. La jambe 11 est ainsi stabilisée et verrouillée en position déployée.

Lorsque l'on désire rétracter l'atterrisseur en soute après le décollage, on commande l'actionneur de déverrouillage 30 pour qu'il se rétracte. L'actionneur de déverrouillage 30 provoque alors le désalignement de la contrefiche secondaire 20 à l'encontre de l'effort exercé par le ressort 22, ce qui provoque également le désalignement de la contrefiche principale 15.

Un actionneur de manoeuvre non représenté tire alors sur la jambe 11 pour la faire remonter jusqu'à sa position rétractée (selon le mouvement indiqué par la flèche F), qui est illustrée sur la figure en traits mixtes. Sur le squelette en traits mixtes, on reconnaît la jambe 11, les bielles 15a, 15b de la contrefiche principale qui est repliée, et également les biellettes de la contrefiche secondaire qui sont de nouveau alignées et confirmées dans l'alignement par le ressort 22.

Le réalignement de la contrefiche secondaire rigidifie l'ensemble constitué de la jambe 11, de la bielle inférieure 15b, et de la contrefiche secondaire 20. Cet ensemble est maintenu en position rétractée par la bielle supérieure 15a.

Lors de ce mouvement, on remarque que le basculeur 31 bascule jusqu'à la position illustrée en pointillés. L'extrémité de l'actionneur de déverrouillage 30 qui lui est attelée décrit une trajectoire plus ample que si elle avait été simplement attelée sur le caisson 12. Ainsi, on constate que la ligne d'action de l'actionneur de déverrouillage 31 (qui passe par ses deux extrémités attelés) change de côté par rapport à l'articulation de la bielle supérieure 20a sur le caisson 12 quand la jambe arrive en position rétractée. Ainsi, tout en continuant à commander l'actionneur de déverrouillage 30 pour qu'il se rétracte, il confirme cette fois la contrefiche secondaire dans son alignement, ce qui est le résultat recherché, puisqu'il s'agit de maintenir l'atterrisseur en position rétractée par l'effet du réalignement de la contrefiche secondaire.

Inversement, lorsque l'on veut déplacer l'atterrisseur jusqu'à sa position déployée, on commande l'actionneur de déverrouillage 30 pour qu'il s'allonge. On brise ainsi l'alignement de la contrefiche secondaire 20 et donc de la contrefiche principale 15. La jambe qui n'est plus retenue descend alors sous l'effet de la gravité, ou sous l'action de l'actionneur de manoeuvre. En arrivant en position déployée, la contrefiche principale 15 et la contrefiche secondaire 20 se réalignent, et l'actionneur de déverrouillage, dont la ligne d'action a changé de côté, tend maintenant à confirmer l'alignement de la contrefiche secondaire 15, alors qu'il pousse toujours.

Le déplacement relatif de l'extrémité de l'actionneur de déverrouillage 30 attelée au basculeur 31 provoque ainsi une inversion de l'effet de l'action de l'actionneur sur la contrefiche secondaire. Alors que dans l'une des positions de l'atterrisseur, une action de l'actionneur tend à briser l'alignement de la contrefiche secondaire, dans l'autre position de l'atterrisseur, la même action tend au contraire à confirmer l'alignement de la contrefiche secondaire. Ainsi, il n'y a pas besoin de prévoir de dispositif pour interrompre ou inverser l'action de l'actionneur de déverrouillage en cours de manoeuvre de l'atterrisseur, ce qui simplifie considérablement la séquence de manoeuvre de l'atterrisseur.

L'invention n'est pas limitée à ce qui vient d'être décrit, mais englobe au contraire toute variante entrant dans le cadre défini par les revendications. En particulier, bien que dans l'exemple illustré, l'actionneur de déverrouillage soit attelé à un basculeur monté tournant sur la jambe de l'atterrisseur, on utilisera plus généralement tout moyen d'attelage assurant un déplacement relatif entre l'extrémité de l'actionneur qui lui est attelé et la jambe de sorte que la ligne d'action de l'actionneur change de côté relativement à l'articulation de la contrefiche secondaire sur la jambe lorsque l'atterrisseur passe de la position déployée à la position rétractée.

## Revendications

1. Atterrisseur d'aéronef comportant :
- une jambe (11) destinée à être articulée sur une structure de l'aéronef pour être mobile entre une position déployée et une position rétractée ;
- une contrefiche principale (15) comportant deux bielles (15a,15b) articulées entre elles, l'une étant attelée à la jambe, et l'autre pouvant être attelée à la structure de l'aéronef, de sorte que lorsque la jambe est en position déployée, les bielles sont sensiblement alignées ;
- une contrefiche secondaire (20) comportant deux biellettes (20a, 20b) articulées entre elles, l'une étant attelée à la contrefiche, et l'autre étant attelée à la jambe, de sorte que lorsque la jambe est en position déployée ainsi que lorsque la jambe est en position rétractée, les biellettes sont sensiblement alignées entre elles et maintenues dans leur alignement par un organe élastique (22) confirmant les biellettes en butée dans la position alignée;
- un actionneur de déverrouillage (30) ayant une première extrémité attelée à la contrefiche secondaire et commandable pour provoquer un désalignement des biellettes lors d'une rétraction ou d'un déploiement de l'atterrisseur en agissant à l'encontre de l'action de l'organe élastique ;
l'actionneur de déverrouillage étant du type double effet, et l'atterrisseur comportant des moyens d'attelage (31, 33) d'une deuxième extrémité de l'actionneur de déverrouillage qui assurent un déplacement relatif de ladite deuxième extrémité vis-à-vis de la jambe de sorte que, pour une même action, l'actionneur de déverrouillage tend à briser un alignement des biellettes lorsque l'atterrisseur est dans l'une des positions, et tend à confirmer ledit alignement lorsque l'atterrisseur est dans l'autre des positions.

2. Atterrisseur selon la revendication 1, dans lequel le moyen d'attelage comprend un basculeur (31) monté articulé sur la jambe (11) de l'atterrisseur, l'actionneur de déverrouillage étant attelé à une extrémité d'un bras du basculeur qui comporte un autre bras ayant une extrémité reliée à un point fixe (32) de la structure de l'aéronef par une bielle directrice (33).

## Patentansprüche

1. Luftfahrzeugfahrwerk, umfassend:
- ein Bein (11), das dazu bestimmt ist, an einer Struktur des Luftfahrzeugs angelenkt zu werden, um zwischen einer ausgefahrenen Position und einer eingefahrenen Position beweglich zu sein;
- eine Hauptstrebe (15), die zwei aneinander angelenkte Stangen (15a, 15b) umfasst, wobei die eine an das Bein gekoppelt ist und die andere an die Struktur des Luftfahrzeugs gekoppelt werden kann, so dass, wenn das Bein in der ausgefahrenen Position ist, die Stangen im Wesentlichen fluchtend ausgerichtet sind;
- eine Sekundärstrebe (20), die zwei aneinander angelenkte kleine Stangen (20a, 20b) umfasst, wobei die eine an die Strebe gekoppelt ist und die andere an das Bein gekoppelt ist, so dass, wenn das Bein in der ausgefahrenen Position ist und auch wenn das Bein in der eingefahrenen Position ist, die kleinen Stangen im Wesentlichen miteinander fluchtend ausgerichtet sind, und durch ein elastisches Element (22), das die kleinen Stangen in Anlage in ihrer fluchtend ausgerichteten Position bestätigt, in ihrer fluchtenden Ausrichtung gehalten werden;
- einen Entriegelungsaktor (30), der ein erstes Ende hat, das an die Sekundärstrebe gekoppelt und steuerbar ist, um eine nichtfluchtende Ausrichtung der kleinen Stangen bei einem Einfahren oder einem Ausfahren des Fahrwerks zu verursachen, indem er entgegen der Wirkung des elastischen Elements wirkt;
wobei der Entriegelungsaktor der Art mit doppelter Wirkung ist, und wobei das Fahrwerk Kopplungsmittel (31, 33) zur Kopplung mit einem zweiten Ende des Entriegelungsaktors umfasst, die eine relative Verschiebung des zweiten Endes gegenüber dem Bein gewährleisten, so dass, für ein und dieselbe Aktion, der Entriegelungsaktor dazu neigt, eine fluchtende Ausrichtung der kleinen Stangen zu durchbrechen, wenn das Fahrwerk in einer der Positionen ist, und dazu neigt, die genannte fluchtende Ausrichtung zu bestätigen, wenn das Fahrwerk in der anderen der Positionen ist.

2. Fahrwerk nach Anspruch 1, bei dem das Kopplungsmittel eine Kippvorrichtung (31) umfasst, die an dem Bein (11) des Fahrwerks angelenkt ist, wobei der Entriegelungsaktor an ein Ende eines Arms der Kippvorrichtung gekoppelt ist, die einen weiteren Arm umfasst, der ein Ende hat, das über eine Leitstange (33) mit einem ortsfesten Punkt (32) der Struktur des Luftfahrzeugs verbunden ist.

## Claims

1. Aircraft landing gear including:
- a leg (11) intended to be articulated to a structure of the aircraft to be movable between a deployed position and a retracted position;
- a main brace (15) including two links (15a, 15b) that are articulated to one another, one of them being coupled to the leg and the other being capable of being coupled to the structure of the aircraft, such that when the leg is in the deployed position, the links are substantially in alignment;
- a secondary brace (20) including two links (20a, 20b) that are articulated to one another, one of them being coupled to the brace and the other being coupled to the leg, such that when the leg is in the deployed position and when the leg is in the retracted position, the links are substantially in alignment with each other and held in alignment by an elastic member (22) confirming the links in abutment in the aligned position;
- an unlocking actuator (30) having a first end coupled to the secondary brace and operable to cause the links to move out of alignment during retraction or deployment of the landing gear by acting against the action of the elastic member;
the landing gear actuator being of the double-acting type, and the landing gear including means (31, 33) for coupling a second end of the unlocking actuator which ensure movement of said second end relative to the leg so that, for a given action, the unlocking actuator tends to break the alignment of the links when the landing gear is in one of its positions and tends to confirm said alignment when the landing gear is in the other of its positions.

2. Landing gear according to claim 1, wherein the coupling means comprise a rocker (31) mounted on and articulated to the leg (11) of the landing gear, the unlocking actuator being coupled to one end of an arm of the rocker that has another arm with an end connected to a fixed point (32) of the structure of the aircraft by a guide link (33).
